Europäisches Patentamt

European Patent Office

Office européen des brevets

(11) Numéro de publication: **0 086 769**
**A1**

# (12) DEMANDE DE BREVET EUROPEEN

(21) Numéro de dépôt: **83870011.0**

(22) Date de dépôt: **09.02.83**

(51) Int. Cl.³: **A 23 G 3/30**

(30) Priorité: **10.02.82 FR 8202146**

(43) Date de publication de la demande: **24.08.83**
**Bulletin 83/34**

(84) Etats contractants désignés: **AT BE CH DE FR GB IT LI LU NL SE**

(71) Demandeur: **CONTINENTAL SWEETS COMPANY, Rue des Deux Eglises 29-31, B-1040 Bruxelles (BE)**

(72) Inventeur: **Bobilliers, Raymond, Rue des Poutrains, 26, F-59200 Tourcoing (FR)**

(74) Mandataire: **Plucker, Guy et al, OFFICE KIRKPATRICK 4 Square de Meeûs, B-1040 Bruxelles (BE)**

(54) **Gomme à mâcher pâteuse fluide.**

(57) L'invention concerne l'industrie de la confiserie.

Elle a pour objet une gomme à mâcher du type dit bubble gum pâteuse fluide qui est constituée par une gomme base en quantité de 15 à 25%, du sirop de glucose 60 DE en quantité de 40 à 60%, du sucre glace en quantité de 20 à 40%, de la glycérine alimentaire en quantité de 0,1 à 5%, un arôme en quantité de 0 à 1%, de la lécithine en quantité de 0,2 à 0,4% et du sorbitol en quantité de 1 à 4%, les pourcentages étant exprimés sur base pondérale.

Cette gomme à mâcher est préférée comme bubble gum liquide présenté sous emballage souple.

La présente invention concerne les gommes à mâcher, terme par lequel il convient d'entendre des bonbons manifestant de la plasto-élasticité et qui ne disparaissent pas au cours de la mastication dans la bouche, indépendamment du fait qu'elles se présentent sous la forme habituelle, dite chewing-gum, ou sous la forme gonflable, dite bubble gum.

Les gommes à mâcher des deux types sont présentées traditionnellement sous forme de bonbons distincts ou doses unitaires enveloppés individuellement ou non et groupés en conditionnements tels que des paquets. Ces gommes à mâcher sous leur forme traditionnelle laissent toutefois à désirer sous certains rapports, à savoir que les doses unitaires sont jugées insuffisantes ou exagérées par le consommateur, qu'il existe un risque de pollution notable des gommes emballées simplement sous papier qui sont transportées au fond des poches.

Les gommes à mâcher conditionnées en emballages multidoses infraudables permettraient de manière évidente de remédier à ces divers inconvénients.

Dans cette perspective générale, la Demanderesse a mis au point une formule spéciale de gomme à mâcher pâteuse fluide présentée de préférence en conditionnements souples infraudables.

On trouvera ci-après un aperçu des principales classes de constituants des gommes à mâcher.

La "gomme" chicle a été remplacée comme constituant essentiel par des élastomères synthétiques, dont la caractéristique principale est une structure à chaîne courte.

Une seconde classe de constituants fondamentaux comprend les édulcorants qui sont des sucres, sauf dans les gommes dites de régime. Les sucres utilisés sont principalement le saccharose sous forme de sirop ou de poudre fine, auquel cas il est appelé également sucre glace, et le glucose qui est commercialisé sous la forme de sirops de glucose ou de sirops de glucose déshydratés.

En particulier, les sirops de glucose doivent satisfaire aux directives "sucres" de la Communauté Economique Européenne et dès lors consister en une solution aqueuse purifiée et concentrée de saccharides nutritifs, obtenue à partir d'amidon et/ou de fécule et présentant, entre autres, une teneur en matière sèche d'au moins 70% en poids et un dextrose-équivalent (DE) d'au moins 20% en poids, sur base de la matière sèche et à exprimer en D-glucose. Les sirops de glucose déshydratés ont un dextrose-équivalent de 20 à 65 et sont obtenus par atomisation sous une forme contenant au maximum 5% d'humidité.

Une troisième classe de constituants moyens comprend les plastifiants et les agents régulateurs d'humidité, dont les deux plus importants sont le sorbitol et le glycérol. Le glycérol, qui est fort hygroscopique, se met rapidement à l'équilibre avec l'humidité ambiante et ne permet donc pas de stabiliser la teneur en humidité du produit comme le fait le sorbitol qui cède, en effet, très difficilement son eau lorsqu'il est en atmosphère sèche et n'absorbe l'eau que lentement en milieu humide.

Quatre autres classes de constituants, en l'occurrence les arômes, les colorants, les émulsionnants et les stabilisants, ne seront pas envisagées plus en détail du fait qu'il s'agit d'agents traditionnels en usage dans différentes branches des industries alimentaires et pharmaceutiques.

L'invention est décrite plus spécifiquement ci-après avec référence au cas du bubble gum, bien qu'elle soit indifféremment applicable dans son principe aux diverses formes de la gomme à mâcher.

Le bubble gum pâteux fluide conforme à l'invention a une constitution tombant dans l'intervalle général précisé ci-après en pourcentage pondéraux.

| Gomme base à chaîne courte | 15 à 25% |
|---|---|
| Glucose 60 D.E. | 40 à 60% |
| Sucre glace | 20 à 40% |
| Glycérine alimentaire | 0,1 à 5% |
| Arôme | 0 à 1% |
| Lécithine | 0,2 à 0,4% |
| Sorbitol | 1 à 4% |

Suivant des formes de réalisation préférées, la concentration en glycérine tombe dans les divers intervalles restreints de 0,1 à 1,5%, de 1,5 à 2,5%, de 2,5 à 3,5% et de 3,5 à 5%.

Cette composition s'est révélée conduire à du bubble gum pâteux fluide se prêtant bien à la présentation en emballages souples, par exemple sous tube.

Lors de la consommation, les agents plastifiants et de gustation qui sont constitués par le glycérol, la lécithine (celle-ci exerçant toutefois aussi la fonction d'émulsionnant) et les édulcorants sont assez rapidement extraits de la dose de gomme dans la bouche, de sorte que le consommateur mastique alors du bubble gum donnant dans la bouche la sensation habituelle.

L'invention est illustrée de manière non limitative par les exemples spécifiques ci-après.

EXEMPLE 1.-

| Gomme base | 19,8 | % |
|---|---|---|
| Sucre glace | 23,8 | % |
| Glucose 60 DE | 50,5 | % |
| Glycérine | 4,0 | % |
| Sorbitol | 1,0 | % |
| Lécithine | 0,3 | % |
| Arôme | 0,6 | % |
| | 100,0 | % |

4

0086769

EXEMPLE 2.-

| | | |
|---|---|---|
| Gomme base | 21,7 | % |
| Sucre glace | 24,0 | % |
| Glucose 60 DE | 48,6 | % |
| Glycérine | 3,0 | % |
| Sorbitol | 2,0 | % |
| Lécithine | 0,2 | % |
| Arôme | 0,5 | % |
| | -------- | |
| | 100,0 | % |

EXEMPLE 3.-

| | | |
|---|---|---|
| Gomme base | 20,0 | % |
| Sucre glace | 30,0 | % |
| Glucose 60 DE | 43,0 | % |
| Glycérine | 2,3 | % |
| Sorbitol | 4,0 | % |
| Lécithine | 0,2 | % |
| Arôme | 0,5 | % |
| | -------- | |
| | 100,0 | % |

EXEMPLE 4.-

| | | |
|---|---|---|
| Gomme base | 20,0 | % |
| Sucre glace | 28,5 | % |
| Glucose 60 DE | 46,6 | % |
| Glycérine | 0,5 | % |
| Sorbitol | 3,5 | % |
| Lécithine | 0,2 | % |
| Arôme | 0,7 | % |
| | -------- | |
| | 100,0 | % |

Pour la fabrication, la gomme base est malaxée avec environ le tiers du glucose présenté sous forme de sirop à 60 DE et le tiers du sucre glace. Lorsque la pâte est devenue homogène, les compléments de glucose et de sucre sont incorporés. Les opérations sont achevées par addition du sorbitol, de la glycérine, de la lécithine et de l'arôme. L'ensemble des opérations est exécuté en 20

0086769

à 30 minutes à une température de 50 à 60°C.

La gomme pâteuse fluide ainsi obtenue est conditionnée en emballages souples, de préférence infraudables, comme des berlingots isolés ou en chapelets, des tubes souples avec scellement à rompre, etc.

En variante, la gomme pâteuse fluide peut être présentée sous la forme enrobée dans une croûte ferme et friable, par exemple en sucre cuit durci.

Bien que divers modes et détails de réalisation aient été décrits pour illustrer l'invention, il va de soi que celle-ci est susceptible de nombreuses variantes et modifications sans sortir de son cadre.

REVENDICATIONS
------------------------------

1.- Gomme à mâcher pâteuse fluide, caractérisée en ce qu'elle est constituée par une gomme base en quantité de 15 à 25%, du sirop de glucose 60 DE en quantité de 40 à 60%, du sucre glace en quantité de 20 à 40%, de la glycérine alimentaire en quantité de 0,1 à 5%, un arôme en quantité de 0 à 1%, de la lécithine en quantité de 0,2 à 0,4% et du sorbitol en quantité de 1 à 4%, les pourcentages étant exprimés sur base pondérale.

2.- Gomme à mâcher suivant la revendication 1, caractérisée en ce qu'elle comprend de la glycérine en quantité de 3,5 à 5,0 % en poids.

3.- Gomme à mâcher suivant la revendication 1, caractérisée en ce qu'elle comprend de la glycérine en quantité de 2,5 % à 3,5 % en poids.

4.- Gomme à mâcher suivant la revendication 1, caractérisée en ce qu'elle comprend de la glycérine en quantité de 1,5 à 2,5 % en poids.

5.- Gomme à mâcher suivant la revendication 1, caractérisée en ce qu'elle comprend de la glycérine en quantité de 0,1 à 1,5 % en poids.

6.- Gomme à mâcher suivant l'une quelconque des revendications précédentes, caractérisée en ce qu'elle est du type bubble gum et comprend une gomme base à chaîne courte.

7.- Gomme à mâcher suivant l'une quelconque des revendications 1 à 5, caractérisée en ce qu'elle est du type chewing-gum.

8.- Gomme à mâcher suivant l'une quelconque des revendications précédentes, caractérisée en ce qu'elle est présentée en emballage souple.

9.- Gomme à mâcher suivant la revendication 8, caractérisée en ce qu'elle est présentée en emballage souple infraudable.

# DOCUMENTS CONSIDERES COMME PERTINENTS

0086769

Numéro de la demande

EP 83 87 0011

| Catégorie | Citation du document avec indication, en cas de besoin, des parties pertinentes | Revendication concernée | CLASSEMENT DE LA DEMANDE (Int. Cl. 3) |
|---|---|---|---|
| Y | GB-A-2 066 044 (LIFE SAVERS) * Page 1, lignes 37,38, 60-65, 111-113; page 3, lignes 2, 14-33; revendications 1,13; page 2, lignes 66-79 * | 1,4-9 | A 23 G 3/30 |
| Y | FR-A-2 410 439 (GENERAL FOOD FRANCE) * Page 1, ligne 4; page 2; page 3, ligne 2 * | 1,6,7 | |
| Y | US-A-4 271 199 (LIFE SAVERS) * Colonne 1, lignes 49-50; colonne 5, lignes 45-55; exemples 1,2,3; colonne 1, lignes 30-32; colonne 2, lignes 40-42,; colonne 4, ligne 64 * | 1,4-9 | |
| Y | US-A-3 982 023 (GENERAL FOOD) * Exemples I,II,III,IV; colonne 2, lignes 22-27 * | 1,5 | DOMAINES TECHNIQUES RECHERCHES (Int. Cl. 3) A 23 G 3/00 |
| A | | 2,3 | |
| A | US-A-3 205 075 (WARNER-LAMBERT) * Colonne 2, lignes 14-15 * | | |
| A | US-A-4 065 579 (LIFE SAVERS) --- -/- | | |

Le présent rapport de recherche a été établi pour toutes les revendications

| Lieu de la recherche LA HAYE | Date d'achèvement de la recherche 26-05-1983 | Examinateur GUYON R.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82

**Office européen des brevets**

# RAPPORT DE RECHERCHE EUROPEENNE

| DOCUMENTS CONSIDERES COMME PERTINENTS | | | Page  2 |
|---|---|---|---|
| Catégorie | Citation du document avec indication, en cas de besoin, des parties pertinentes | Revendication concernée | CLASSEMENT DE LA DEMANDE (Int. Cl. 3) |
| A | FR-A-2 263 710  (ANHEUSER-BUSCH) | | |
| | ----- | | |
| | | | **DOMAINES TECHNIQUES RECHERCHES (Int. Cl. 3)** |

Le présent rapport de recherche a été établi pour toutes les revendications

| Lieu de la recherche | Date d'achèvement de la recherche | Examinateur |
|---|---|---|
| LA HAYE | 26-05-1983 | GUYON R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82